# DEMANDE DE BREVET EUROPEEN

(11) **EP 0 765 611 A1**
(43) Date de publication de la demande: **02.04.1997**
(21) Numéro de dépôt: 96402016.8
(22) Date de dépôt: 24.09.1996
(51) Int. Cl.: A41D 13/00, B64D 10/00, A41B 9/08

(54) **Sous-vêtement étanche destiné à être porté sous des vêtements de vol tels qu'une combinaison de vol**

(30) Priorité: 26.09.1995 FR 9511361
(71) Demandeur: AERAZUR S.A., F-92137 Issy les Moulineaux (FR)
(72) Inventeur: Amichaud, Jean-Claude, 91210 Draveil (FR); Alberola, Jean-Pierre, 92320 Chatillon (FR); Turillon, André, 95610 Eragny (FR)
(74) Mandataire: de Saint-Palais, Arnaud Marie

(57) **Abrégé**

Le sous-vêtement selon l'invention est intégral et destiné à être porté sous des vêtements de vol tels qu'une combinaison de vol, ce sous-vêtement comprenant un seul élément réalisé en un tissu léger et élastique comportant une membrane micro-poreuse étanche à l'eau et perméable à la transpiration, ledit élément étant réalisé à l'aide de plusieurs pièces dudit tissu assemblées avec étanchéité, de manière à épouser étroitement sensiblement tout le corps de l'utilisateur.

## Description

La présente invention concerne un sous-vêtement destiné à assurer la protection de son utilisateur en cas d'immersion accidentelle en eau froide, notamment en le protégeant de la déperdition calorifique et donc du risque d'une hypothermie grave lorsque la température de l'eau est inférieure à 15°C.

Elle s'applique notamment, mais non exclusivement, à l'équipement des pilotes d'aérodynes.

Dans de telles applications, les équipements connus de ce type comportent une combinaison perméable à l'air et imperméable à l'eau, qui présente nécessairement une certaine ampleur pour pouvoir s'adapter à la morphologie d'utilisateurs différents et aux changements d'habillement d'un même utilisateur. Par ailleurs, cette combinaison est généralement portée sous un pantalon anti-G, ce qui crée, du fait de l'ampleur de la combinaison, une certaine contrainte sur le plan du confort, liée aux plis de tissu qui se forment inévitablement sous le pantalon anti-G.
De plus, ce type d'équipement provoque une sur-épaisseur qui rend incompatible le port de certains équipements tels qu'une combinaison de protection NBC (Nucléaire, Bactériologique, Chimique).

La présente invention a pour but de supprimer ces inconvénients. A cet effet, elle propose un sous-vêtement intégral destiné à être porté sous des vêtements de vol tels qu'une combinaison de vol.

Ce sous-vêtement est caractérisé en ce qu'il comprend un seul élément réalisé en un tissu léger et élastique comportant une membrane micro-poreuse étanche à l'eau et perméable à la transpiration, ledit élément étant réalisé à l'aide de plusieurs pièces dudit tissu assemblées avec étanchéité, de manière à épouser étroitement sensiblement tout le corps de l'utilisateur.

La coupe ajustée du sous-vêtement et sa texture élastique permettent d'envisager de porter par-dessus, d'autres équipements, tel qu'un pantalon anti-G, une combinaison de vol pressurisée ou non, une combinaison de protection NBC, un gilet de sauvetage, ou encore un gilet pressurisé.

Selon une particularité de l'invention, le sous-vêtement ne comporte aucune couture à la taille et au niveau des hanches.

Selon une autre particularité de l'invention, le sous-vêtement est réalisé par assemblage d'un nombre limité de pièces qui sont assemblées bord à bord de manière à ne pas affecter l'élasticité de la matière employée, et à limiter les sur-épaisseurs qui peuvent être gênantes, notamment dans la cas où le sous-vêtement est porté sous un pantalon anti-G ou des vêtements pressurisés. L'étanchéité de l'assemblage des pièces peut être assurée par fixation avec étanchéité d'une bande élastique et étanche le long des lignes d'assemblage.

Ce sous-vêtement peut avantageusement comporter sur sa face interne une doublure assurant une protection thermique supplémentaire.

Ce sous-vêtement est de préférence réalisé dans une matière ininflammable, voire résistante au feu.

Un mode de réalisation du sous-vêtement selon l'invention sera décrit ci-après, à titre d'exemple non limitatif, avec référence aux dessins annexés dans lesquels :
Les figures 1 à 8 représentent schématiquement, en vue de face et de profil, différents modes d'exécution du sous-vêtement selon l'invention ;
La figure 9 représente le patron des pièces servant à réaliser le sous-vêtement ;
La figure 10 illustre le mode d'assemblage des pièces constituant le sous-vêtement ;
La figure 11 montre le patron des pièces servant à réaliser un chausson du sous-vêtement ;
La figure 12 montre un chausson du sous-vêtement.

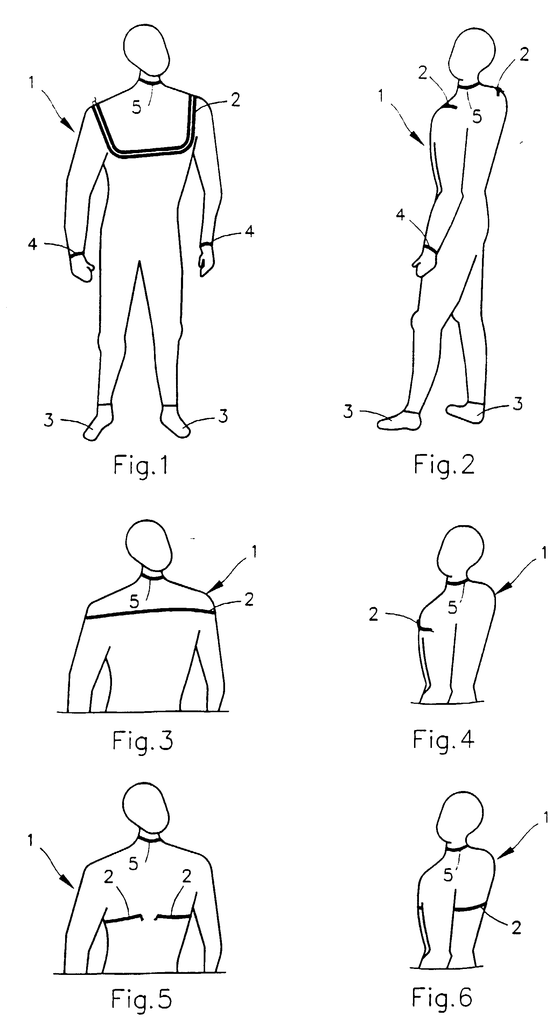

Sur les figures 1 et 2, le sous-vêtement 1 selon l'invention comprend une partie principale 1 en tissu léger, souple, élastique et étanche, qui épouse étroitement tout le corps de l'utilisateur à l'exception de la tête, des mains et des pieds.
Cette partie 1 est munie d'une ouverture 2 fermée par une fermeture à glissière étanche. Elle est raccordée de manière étanche à des chaussons étanches 3, et à des manchons élastiques d'étanchéité 4,5 au niveau du cou et des poignets qui y épousent le corps de l'utilisateur de manière à empêcher l'eau de pénétrer par l'ouverture du cou ou des manches du sous-vêtement.

Les manchons de poignets 4 et de cou 5 sont, par exemple, en élastomère.

Selon le mode d'exécution représenté sur les figures 1 et 2, l'ouverture 2, placée sur la poitrine, présente sensiblement la forme d'un U allant du bord d'une épaule à l'autre.

Selon le mode d'exécution représenté sur les figures 3 et 4, l'ouverture 2 est disposée sur la poitrine selon une ligne horizontale allant d'un avant-bras à l'autre.

Sur les figures 5 et 6, l'ouverture 2 est disposée dans un plan horizontal, de manière à faire sensiblement tout le tour du buste en passant sous les bras, les deux extrémités de l'ouverture étant situées sur la poitrine.

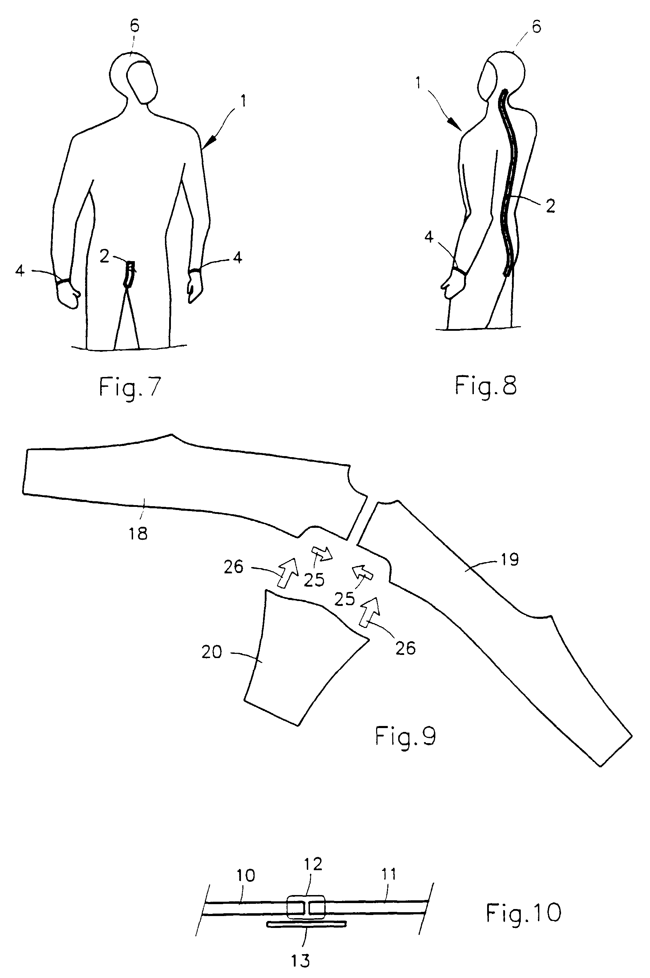

Sur les figures 7 et 8, la partie principale 1 est solidaire d'une cagoule 6, et l'ouverture 2 est située dans le dos de l'utilisateur et suit sensiblement la colonne vertébrale à partir de la nuque pour remonter entre les jambes de manière à servir en même temps de braguette.

La partie principale 1 du sous-vêtement est avantageusement réalisée en 6 pièces symétriques deux à deux pour recouvrir étroitement, respectivement, les moitiés droite et gauche de l'utilisateur, la moitié gauche des pièces étant représenté sur la figure 9.

Ainsi, la moitié gauche de la partie principale 1 comprend :
- une première pièce 18 destinée à couvrir respectivement le devant gauche du corps, du cou aux chevilles, à l'exception des bras,
- une seconde pièce 19 destinée à couvrir la partie gauche du dos, de la nuque aux chevilles, à l'exception des bras, assemblée avec la première pièce 18 le long de l'épaule (suivant la flèche 25) et de l'aisselle à la cheville, et
- une manche 20 qui se replie sur elle-même, et qui s'assemble avec une partie de la première pièce et de la seconde pièce, suivant les flèches 26.

De cette manière, on obtient deux parties symétriques constituées par les pièces 18,19,20, qui sont ensuite assemblées le long d'une ligne allant de la nuque au cou en passant entre les jambes.

Grâce à cette disposition des coutures, la partie principale 1 comporte un nombre limité de coutures et ne comprend aucune couture transversale à la taille ou au niveau des hanches, susceptible de gêner l'utilisateur.

Les différentes pièces formant la partie principale 1 sont avantageusement assemblées par couture bord à bord, comme représenté sur la figure 10, de manière à éviter toute sur-épaisseur.
Sur cette figure, les deux pièces 10,11 à assembler sont disposées bord à bord, et sont cousues dans cette position par un fil de couture 12 selon un chemin sensiblement hélicoïdal traversant alternativement les deux pièces 10,11.
L'étanchéité de la couture est assurée par une bande 13 étanche et élastique, fixée de manière étanche sur un côté des pièces, le long de la couture, et une partie des deux pièces, par exemple par thermo-soudage ou thermo-collage.

Les bandes étanches sont ainsi fixées sur les coutures, sur la face extérieure du sous-vêtement. De cette manière, on obtient une étanchéité autoclave, la pression exercée par l'eau sur le sous-vêtement en cas d'immersion ayant tendance à presser les bandes d'étanchéité contre la face extérieure du sous-vêtement.

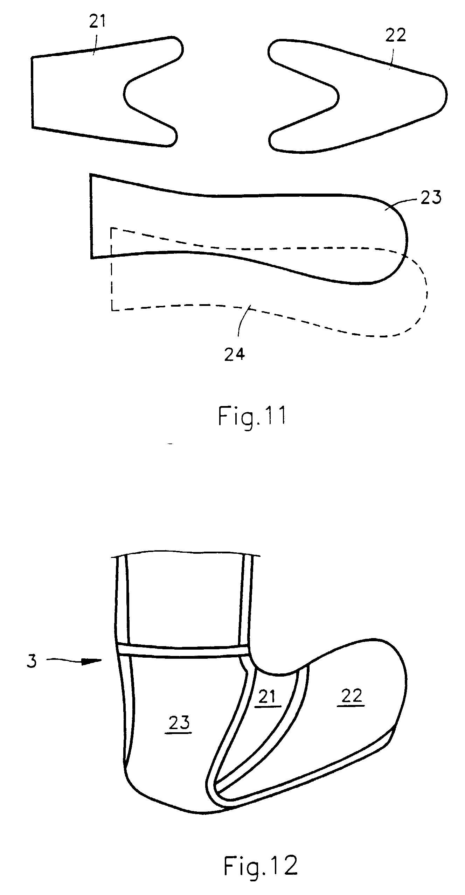

Sur les figures 11 et 12, chaque chausson 3 est réalisé en trois pièces 21, 22, 23, à savoir :
- une pièce 21 destinée à couvrir la partie avant de la cheville, et grâce à deux languettes, deux parties latérales du pied en direction du talon,
- une pièce 22 couvrant tout le dessus du pied, et
- une pièce 23 servant de semelle et couvrant également la partie arrière de la cheville.

Ces pièces sont également assemblées de la manière telle que représentée sur la figure 10.

La pièce 23 peut avantageusement être renforcée par une pièce 24 (montré en traits interrompus) en tissu résistant à l'abrasion.

La forme originale des pièces 21, 22, 23 permet de réaliser un chausson très ajusté qui s'adapte parfaitement à la forme du pied, ce qui évite la formation de plis dans le cas où l'utilisateur porte des chaussures sur les chaussons.

Comme précédemment mentionné, la partie principale 1 est réalisée de manière à être étroitement ajustée au corps de l'utilisateur pour limiter les plis, en un tissu léger, étanche et élastique, par exemple constitué par une membrane étanche à l'eau et élastique, en une matière telle que le PTFE (PolyTétraFluoroEthylène) laminée sur un tissu en mélange polyamide (côté face intérieure). La membrane étanche est de préférence micro-poreuse de manière à être perméable à la transpiration.
Ce tissu peut également être constitué par une membrane en polyuréthane étanche et micro-poreuse qui présente une très bonne élasticité, recouverte d'un côté (face intérieure) par un jersey en polyester ou en fibre résistante au feu.

Grâce aux propriétés de légèreté, souplesse, élasticité et de perméabilité à la vapeur d'eau du tissu employé, et à sa forme ajustée, un tel sous-vêtement présente des caractéristiques de confort parfaitement adaptées à une utilisation en tant que sous-vêtement. Il peut ainsi être porté sans gêne sous des vêtements de vol tels qu'un pantalon anti-G, des vêtements pressurisés, ou une combinaison NBC, ainsi que des chaussures ou des bottes, tout en offrant une protection efficace contre l'eau.

Il est à noter que la forme de couture bord à bord utilisée permet sensiblement de préserver l'élasticité du tissu, laquelle est faiblement réduite par les bandes d'étanchéité, également élastiques.

Pour assurer en même temps une protection contre le froid, la membrane étanche peut être couverte, du côté intérieur, par une fourrure acrylique qui présente également de bonnes propriétés d'élasticité et de légèreté.

Le sous-vêtement peut également être réalisé dans des matières résistantes au feu, telles que des polyamides aromatiques, de manière à ce qu'elle ne propage pas les flammes en cas d'incendie.

## Revendications

1. Sous-vêtement intégral destiné à être porté sous des vêtements de vol tels qu'une combinaison de vol,
caractérisé en ce qu'il comprend un seul élément réalisé en un tissu léger et élastique comportant une membrane micro-poreuse étanche à l'eau et perméable à la transpiration, ledit élément étant réalisé à l'aide de plusieurs pièces dudit tissu assemblées avec étanchéité, de manière à épouser étroitement sensiblement tout le corps de l'utilisateur.

2. Sous-vêtement selon la revendication 1,
caractérisé en ce qu'il comprend :
- une partie principale (1) couvrant tout le corps de l'utilisateur à l'exception de la tête et des mains,
- une ouverture (2) fermée par une fermeture à glissière étanche, permettant de revêtir le sous-vêtement,
- des chaussons étanches (3) raccordés de manière étanche à la partie principale (1), et
- des manchons d'étanchéité (4) épousant le contour des poignets, raccordés de manière étanche à la partie principale (1).

3. Sous-vêtement selon la revendication 2,
caractérisé en ce qu'il comprend un manchon d'étanchéité (5) épousant le contour du cou de l'utilisateur, raccordé de manière étanche à la partie principale (1).

4. Sous-vêtement selon la revendication 2,
caractérisé en ce qu'il comprend une cagoule étanche (6) raccordée de manière étanche à la partie principale (1).

5. Sous-vêtement selon l'une des revendications 2 à 4,
caractérisé en ce que l'ouverture (2) est disposée le long de la colonne vertébrale de l'utilisateur, en partant de la nuque pour remonter entre les jambes de manière à former en même temps une braguette.

6. Sous-vêtement selon l'une des revendications 2 à 4,
caractérisé en ce que l'ouverture (2) est disposée sur la poitrine de l'utilisateur, présente sensiblement la forme d'un U, et s'étend d'une épaule à l'autre.

7. Sous-vêtement selon l'une des revendications 2 à 4,
caractérisé en ce que l'ouverture (2) est disposée le long d'une ligne passant dans le dos et sous les bras de l'utilisateur, les deux extrémités de l'ouverture (2) étant situées sur la poitrine.

8. Sous-vêtement selon l'une des revendications 2 à 7,
caractérisé en ce que la partie principale (1) est réalisée en six pièces, à savoir deux pièces (20) servant de manches, et quatre pièces couvrant respectivement quatre portions du corps de l'utilisateur, du cou à la cheville.

9. Sous-vêtement selon l'une des revendications 2 à 8,
caractérisé en ce que la partie principale (1) ne comporte aucune couture au niveau des hanches et de la taille de l'utilisateur.

10. Sous-vêtement selon l'une des revendications 2 à 9,
caractérisé en ce que les chaussons (3) sont réalisés en trois pièces conformées de manière à épouser la forme des pieds de l'utilisateur.

11. Sous-vêtement selon l'une des revendications précédentes,
caractérisé en ce qu'il est réalisé en plusieurs pièces de tissu élastique, étanche et perméable à la vapeur d'eau, assemblées bord à bord à l'aide d'un fil de couture (12) et d'une bande étanche (13) fixée de manière étanche sur la couture à l'extérieur du sous-vêtement, de manière à assurer l'étanchéité de celle-ci.

12. Sous-vêtement selon la revendication 11,
caractérisé en ce que la bande (13) est fixée sur la face extérieure du sous-vêtement par thermo-soudage ou thermo-collage.

13. Sous-vêtement selon l'une des revendications précédentes,
caractérisé en ce que l'intérieur du sous-vêtement est doublée d'une protection thermique supplémentaire.

14. Sous-vêtement selon l'une des revendications précédentes,
caractérisé en ce qu'il est réalisé dans des matières résistantes au feu.
